# EUROPEAN PATENT SPECIFICATION

(11) **EP 2 010 446 B1**
(45) Date of publication and mention of the grant of the patent: **28.06.2017**
(21) Application number: 07727809.1
(22) Date of filing: 04.04.2007
(51) Int. Cl.: B66C 1/36, E02F 3/96, F16B 45/02

(54) **COUPLING**
VERBINDUNG
COUPLAGE

(30) Priority: 06.04.2006 GB 0606869
(43) Date of publication of application: 07.01.2009
(73) Proprietor: Prendergast, Bartholomew, Ballindine Mayo (IE)
(72) Inventor: Prendergast, Bartholomew, Ballindine Mayo (IE)
(74) Representative: Evans, Huw David Duncan
(86) International application number: PCT/EP2007/053340
(87) International publication number: WO 2007/113324

(56) References cited:
- EP-A- 0 623 709
- CH-A- 195 815
- US-A- 1 494 289
- US-A- 1 599 087
- US-A- 3 899 806

## Description

The present invention relates to a coupling and more particularly but not solely to a coupling in the form of a hook for use on the arm of a plant machine, such as digger, back-hoe loader or excavator, to enable the machine to be utilised for lifting purposes.

Plant machinery such as diggers, back-hoe loaders and excavators comprise a hydraulically actuated arm, which is primarily used for excavating trenches or the like. However, there are a large number of other uses to which such machines are put, due to the nature of the work carried out on most building sites, in particular larger scale building sites. For example, an excavator arm will often be used in place of a crane for lifting and transporting smaller loads, for example sections of concrete pipe or the like, perhaps for deposition within a trench which the excavator has already prepared.

For such tasks, the shovel or so-called bucket may be temporarily removed from the excavator arm, in particular when a quick hitch coupling is employed, and a heavy-duty hook fitted in its place. Alternatively such a hook may be welded or otherwise secured to the bucket itself, for example at the rear thereof.

In order to improve the safety of such hooks for lifting purposes, a spring loaded latch can be provided between the point and shank of the hook, in order to close off the hook so as to maintain for example, a chain, sling or shackle therein, regardless of the orientation of the hook. This is particularly important if overhead lifting is to be undertaken. However, even when conventional lifting is being undertaken, open hooks are a significant safety concern. For example, if a load is being lowered by an excavator arm, into a trench or the like, the load may become temporarily snagged during lowering, allowing the tension within the sling, chain or rope securing the load to the hook to slacken, wherein the sling, chain or rope may become unhitched from the hook, allowing the load to drop. It is thus preferable that such safety latched hooks are employed for all lifting operations.

US3899806 and EP0624709 disclose a coupling comprising a body defining a slot which communicates at a first end with an exterior of the body and which is closed at a second end, and a gate member rotatably mounted to the body at the first end of the slot to normally close the same, wherein the slot in the body is substantially c-shaped and comprises a first arm and a second arm, the slot being closed at the end of the first arm by the body, the end of the second arm being open and comprising a mouth across which the gate member is disposed, the second arm being normally arranged uppermost in use of the coupling. In EP0624709, the rotatable gate member comprises a recess which may be brought into communication with the slot by rotation of the gate member relative to the body.
CH195815 discloses a coupling of the type disclosed in US3899806 and EP0624709 which is characterised in that the gate member is rotatable in a plane subtended by the c-shaped slot and about an axis which extends substantially perpendicular to the plane.
The above-mentioned safety latches are generally pivotally mounted to the shank of the hook, and are spring biased against the point by means of any suitable spring. Thus the weakest point of such latched hooks tend to be the spring, which can completely fail, or significantly weaken over a prolonged period of use. Such a weakened or failed spring may allow the latch to fall back against the shank of the hook, leaving the hook open and possibly allowing any sling, chain or rope to become unhitched therefrom.

Also, the latches are often formed from a pressed piece of metal, which is not designed to withstand heavy loads. Accordingly there is a risk that the latch may fail if the hook becomes orientated in a position where the sling, chain or rope is solely supported by the latch.

I have now devised a coupling that alleviates the above-mentioned problems of the prior art.
In accordance with the present invention there is provided a coupling of the type disclosed in EP0624709 which is characterised in that the gate member comprises a substantially circular element arranged for rotation about its central axis, the recess comprising a region which extends radially into the element towards said rotational axis.

Preferably a portion of the body of the coupling is arranged for mounting to a device such as the arm of a plant machine.

Preferably, the second arm of the slot is disposed adjacent said mounting portion of the coupling, the slot extending away from the mounting portion towards the first arm thereof. Thus, when the coupling is mounted to a downwardly facing surface of a device such as the arm of a plant machine, any sling, chain or rope connected to the coupling is retained in the first arm of the slot by gravity, in a position which is away from the gate.

In order to avoid the need for a spring, the gate is preferably freely rotatably mounted to the body.

Preferably means are provided for locking the gate in a closed position.

Preferably, the coupling comprises a stop adapted to prevent rotation of the gate beyond a set point for a given direction of rotation of the gate.

Preferably, the element is journalled in a circular recess formed in the body of the coupling.

In one embodiment, the gate member may comprise a pair of circular elements concentrically mounted to a wall of the body, one on either side thereof and interconnected by an axle.

In an alternative embodiment, the circular element is bounded at opposite axial ends thereof by walls of the body.

Preferably an actuator extends from the gate member to facilitate rotation of the latter.

Preferably the gate member frictionally engages the body of the coupling to prevent rotation of the gate member from its closed position. Locking means may be provided for locking the gate member against rotation.

Preferably, the body defines a shoulder projecting from the first end of the slot.

Also in accordance with this invention, there is provided a plant machine comprising a coupling as hereinbefore described.

Preferably the machine comprises an articulated arm, the coupling being coupled to the machine at or adjacent the distal end of the arm.

Embodiments of the present invention will now be described by way of example only and with reference to the accompanying drawings, in which:
Figure 1 is an exploded side view of an embodiment of coupling according to the present invention;
Figures 2 and 3 are side views of the coupling of Figure 1, respectively illustrating the steps of how a shackle is engaged therewith;
Figure 4 is a side view of the coupling of Figure 1, illustrating how the shackle is captively retained in a slot in a body of the coupling;
Figure 5 is a side elevation of the coupling of Figure 1, when connected to an excavator arm, with the arm in a first position;
Figure 6 is a side elevation of the coupling of Figure 1, when connected to the excavator arm of Figure 5, with the arm in a second position;
Figure 7 is a perspective view of a second embodiment of coupling according to the present invention;
Figure 8 is a perspective view of a third embodiment of coupling according to the present invention; and
Figure 9 is a perspective view of the coupling of Figure 8 when fitted to the mounting bracket of a bucket of an excavator.

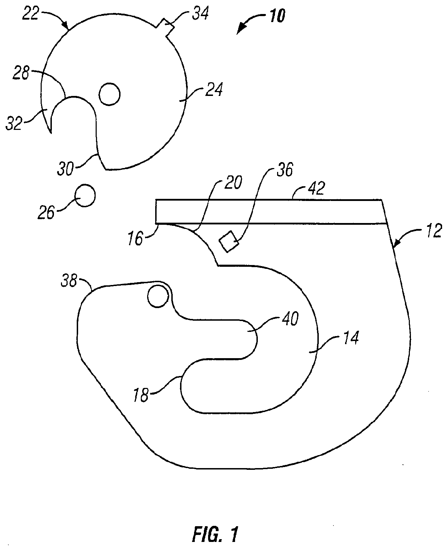

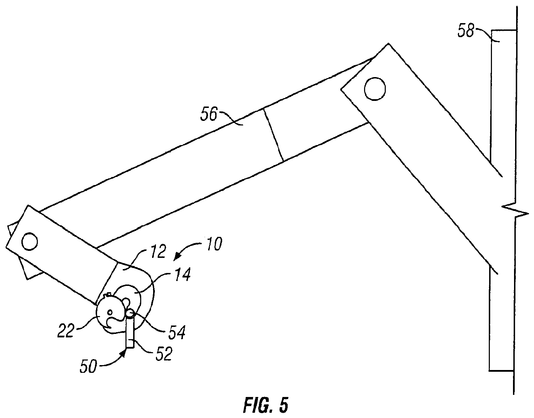

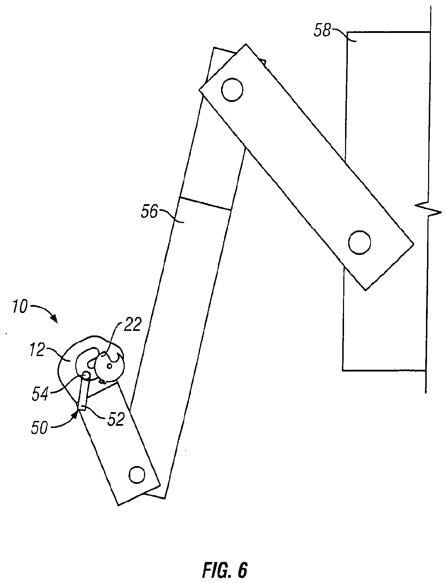

Referring to Figure 1 of the accompanying drawings, there is shown a coupling 10, for use in lifting or hoisting loads or the like, as will be described in detail hereinafter. The coupling 10 is particularly suited to be mounted to an arm of an excavator 56 or the like, as will be explained hereinafter with reference to Figures 5 & 6.

The coupling 10 comprises a body 12 which defines an elongate slot 14 therein. The slot 14 has a first end 16 opening outwardly of body 12, in order to allow access to the slot 14, and a second end 18 which is closed by the body 12. In the preferred embodiment illustrated, the slot 14 is substantially c-shaped, except for a substantially arcuate portion 20 located at the first end 16. The shape of the slot 14 is particularly advantageous, the reasons for which will be described in detail hereinafter.

The coupling 10 further comprises a gate 22 rotatably mounted to the body 12, adjacent the first end 16. The gate 22 comprises a pair of substantially identical and substantially circular plates 24, one mounted on either side of the body 12, and secured together and to the body 12 by means of an axle 26 which passes through the body 12, onto each end of which one of the plates 24 is secured. The gate 22 is therefore freely rotatable relative to the body 12, by means of the axle 26. Each plate 24 is provided with a tangentially-extending recess 28 therein, the recess 28 being shaped to define a front 30 which slopes gradually out of the recess 28, and a rear 32 which rises sharply behind the recess 28. The purpose of the recess 28, in addition to the front 30 and rear 32 thereof, will be described in detail hereinafter. Each plate 24 further includes a tab 34 projecting radially outwardly therefrom, with the body 12 being provided with a corresponding stop 36, the functions of which will also be described hereinafter.

As mentioned hereinbefore, the coupling 10 is intended to facilitate the hoisting of loads or the like, for example via the arm of an excavator. The coupling 10 thus acts as an anchor point to which a tether, such as a rope, sling, chain (not shown) or the like may be secured, with such a tether also being secured to or around a load in order to allow same to be lifted and manoeuvred as required. It can be seen from Figure 1, that the body 12, in combination with the slot 14 therein, essentially defines a hook shape onto which a loop of a sling, or a link of a chain, may be secured in conventional fashion, for example by means of a u-shaped shackle.

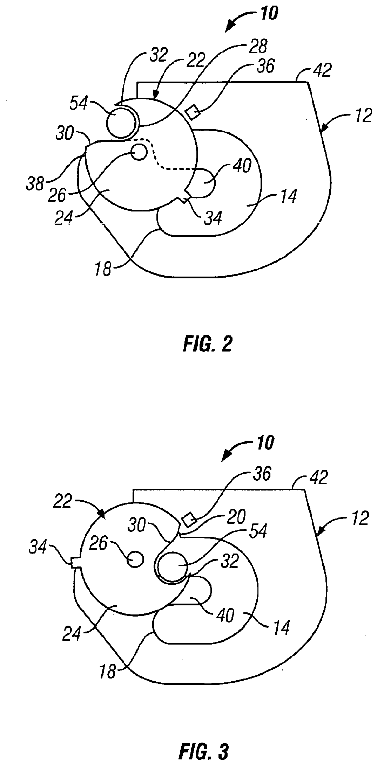

Referring to Figure 2 of the drawings, it can be seen that the gate 22 normally closes the first end 16 of the slot 14, thereby preventing access to the slot 14 from outside the body 12. Thus, in order to engage the pin 54 of a shackle with the coupling 10, the gate 22 must initially be rotated into the position illustrated in Figure 2, in which the recess 28 therein is located at the first end 16 of the slot 14. With the recess 28 in this position, the front 30 of the gate 22 opens outwardly away from the slot 14, allowing the pin 54 of the shackle to be seated within the pair recesses 28 (one on each plate 24), with the inclined front 30 of each acting to guide the pin 54 into the recess 28. At this point a shoulder 38 of the body 12, projecting forwardly of the first end 16, prevents the gate 22 from rotating in an anti-clockwise direction, away from the first end 16 and slot 14. Once the pin 54 has been guided along the front 30 and into the recess 28, the rear 32 will arrest and retain the pin 54 within the recess 28.

Referring now to Figure 3 of the drawings, the gate 22, with the pin 54 seated within the recesses 28, can then be rotated in a clockwise direction, for example by simply pushing the pin 54 against the rear 32 of the recess 28. As the gate 22 rotates in a clockwise direction, the pin 54 travels through the arcuate portion 20 of the slot 14, to arrive at the position shown in Figure 3, wherein the pin 54 abuts against a finger 40 of the body 12.

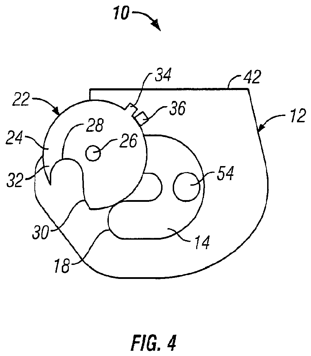

Referring then to Figure 4 of the drawings, the pin 54 can be drawn out of the recess 28 and thus fully into the slot 14. At this point the pin 54 will drop under gravity into the lower portion of the slot 14. The gate 22 is then preferably further rotated in a clockwise direction until the tab 34 on each plate 24 abuts against the corresponding stop 36, thereby retaining the gate 22 in the position illustrated in Figure 4. It will thus be appreciated that the pin 54 is therefore trapped within the slot 14, between the closed end 18 and the gate 24 closing the first end 16. The pin 54 will thus remain trapped within the slot 14, regardless of the orientation of the coupling 10.

The body 12 is provided with a planar end face 42, which is adapted for connection to the arm of an excavator, for example by welding, as shown in Figure 5 of the drawings. When the coupling 10 is in the orientation shown in Figure 5, it can be seen that the shackle 50, and in particular the pin 54 thereof, falls under gravity against the second end 18 of the slot 14, which is closed, and thus the shackle 50 is safely retained in the coupling 10. The pin 54 will remain in the lower portion of the slot 14 for most orientations of the coupling 10. However, if the coupling 10 is displaced into an orientation like that illustrated in Figure 6, the pin 54 will tend to be drawn back around the slot 14 in the direction of the first end 16 thereof. However, the gate 22 is positioned to close the first end 16 and thus the possible exit of the pin 54 from the slot 14 is prevented.

It will be appreciated that in order to remove the shackle 50 from the coupling 10, it would be necessary to carefully co-ordinate the position of the pin 54 within the slot 14, and the position of the recesses 28 relative to the slot 14, such that the pin 54 can be passed back into the recesses 28 as illustrated in Figure 3, and the gate 22 then rotated in an anticlockwise direction to draw the pin 54 up through the arcuate portion 20 and out of the first end 16. Thus the coupling 16 provides a simple yet effective means of securing the shackle 50, or any other tether or the like (not shown), without relying on relatively weak springs or the like for the operation thereof.

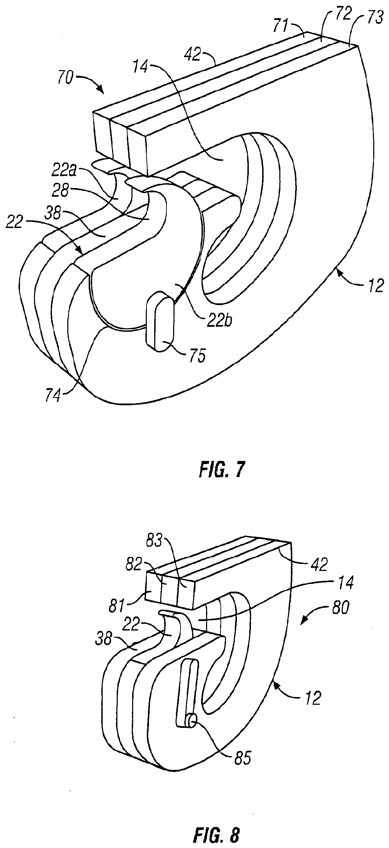

Referring to Figure 7 of the drawings, there is shown an alternative embodiment of coupling 70, which is similar to the embodiment of Figures 1 to 6 and like parts are given like reference numerals. In this embodiment, the body 12 of the coupling 70 is of laminar construction and comprises three metal plates 71,72,73 of substantially identical shape, which are stacked together and interconnected by welding, by rivets or by pins. The outer plates 71,73 of the body 12 are formed with cut-outs 74 in their shoulder portion 38 for captively receiving the respective generally circular plates 22a,22b of the gate 22. An actuator 75 extends from one or both plates 22a, 22b.

Referring to Figure 8 of the drawings, there is shown a further embodiment of coupling 80, which is similar to the embodiment of Figure 7 and like parts are given like reference numerals. In this embodiment, the body 12 of the coupling 70 is again of laminar construction and comprises three metal plates 81,82,83 of substantially identical shape, which are stacked together and interconnected by welding, by rivets or by pins. The inner plate 82 of the body 12 is formed with a cut-out in its shoulder portion 38 for captively receiving the single generally circular plate of the gate 22. An actuator 85 extends radially from one or both ends of an axle (not shown) of the gate 22.

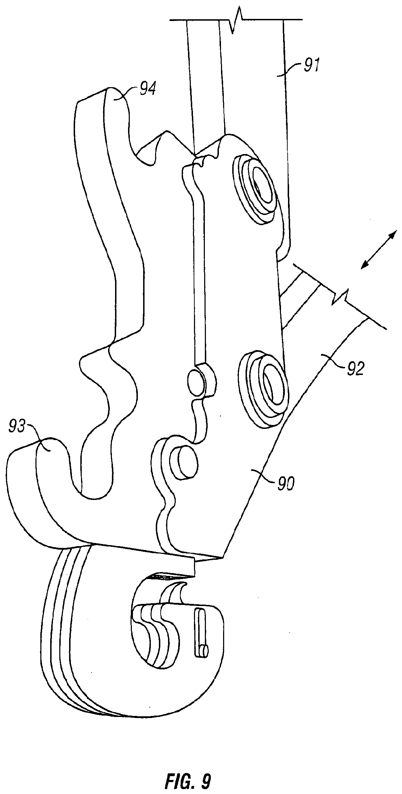

Referring to Figure 9 of the drawings, there is shown a conventional bracket 90 for mounting the bucket of an excavator to an articulated arm thereof. The arm comprises a first fixed portion 91 and a second portion 92 which is moveable relative to the first portion 91 by means of a hydraulic actuator. The two arm portions 91, 92 are rotationally connected to the bracket 90 at respective spaced apart locations. The bracket 90 comprises hooks 93, 94 for coupling to formations on the front wall of a rearwardly-facing excavator bucket.

The planar end face 42 of the body 12 of a coupling 80 is attached to the lower distal end of the bracket 91 by welding. A coupling 80 in accordance with this invention thus enables the power of the excavator and the mobility of the arm to be utilised to safely and reliably lift heavy loads without the risk of the loads becoming detached. It will however be appreciated from the foregoing description of the configuration and operation of the coupling, that the coupling can have a large number of other applications which are not associated with excavators.

In an alternative embodiment, the means are provided for locking the gate against rotation out of its closed position.

## Claims

1. A coupling comprising a body (12) defining a slot (14) which communicates at a first end (16) with an exterior of the body (12) and which is closed at a second end (18), and a gate member (22) rotatably mounted to the body (12) at the first end of the slot (14) to normally close the same, wherein the slot (14) in the body (12) is substantially c-shaped and comprises a first arm and a second arm, the slot (14) being closed at the end (16) of the first arm by the body (12), the end (18) of the second arm being open and comprising a mouth across which said gate member (22) is disposed, the second arm being normally arranged uppermost in use of the coupling, said gate member (22) being rotatable in a plane subtended by the c-shaped slot (14) and about an axis which extends substantially perpendicular to said plane, the rotatable gate member (22) comprising a recess (28) which may be brought into communication with the slot (14) by rotation of the gate member (22) relative to the body (12) **characterised in that** the gate member (22) comprises a substantially circular element (24) arranged for rotation about its central axis, the recess (28) comprising a region which extends radially into the element (24) towards said rotational axis.

2. A coupling as claimed in claim 1, **characterised in that** the second arm of the slot (14) is disposed adjacent a mounting portion (42) of the coupling, the slot (14) extending away from the mounting portion (42) towards the first arm thereof.

3. A coupling as claimed in claim 1 or claim 2, **characterised in that** locking means are provided for locking the gate member (22) against rotation.

4. A coupling as claimed in any preceding claim, **characterised in that** a stop (36) is adapted to prevent rotation of the gate member (22) beyond a set point for a given direction of rotation of the gate member (22).

5. A coupling as claimed in any preceding claim, **characterised in that** the element (24) is journalled in a part-circular recess (74) formed in the body (12) of the coupling.

6. A coupling as claimed in any preceding claim, **characterised in that** the gate member (22) comprises a pair of circular elements (22a,22b) concentrically mounted to a wall of the body (12), one on either side thereof and interconnected by an axle.

7. A coupling as claimed in any preceding claim, **characterised in that** the circular element (24) is bounded at opposite axial ends thereof by walls (71,73) of the body (12).

8. A coupling as claimed in any preceding claim, **characterised in that** an actuator (75) extends from the gate member (22) to facilitate rotation of the latter.

9. A coupling as claimed in any preceding claim, **characterised in that** the gate member (22) frictionally engages the body (12) of the coupling to prevent rotation of the gate member (22) from its closed position.

10. A coupling as claimed in any preceding claim, **characterised in that** the body (12) defines a shoulder (40) projecting from the first end of the slot (14).

11. A plant machine **characterised in that** the plant machine comprises a coupling as claimed in any preceding claim.

12. A plant machine as claimed in claim 11, **characterised in that** the plant machine comprises an articulated arm, the coupling being coupled to the machine at or adjacent the distal end of the arm.

## Patentansprüche

1. Kupplung, umfassend einen Körper (12), der einen Schlitz (14) definiert, welcher an einem ersten Ende (16) mit dem Äußeren des Körpers (12) verbunden ist und welcher an einem zweiten Ende (18) geschlossen ist, und ein Pfortenglied (22), das rotierbar an dem Körper (12) an dem ersten Ende des Schlitzes (14) montiert ist um normalerweise letzteres zu schließen, wobei der Schlitz (14) in dem Körper (12) im Wesentlichen C-förmig ist und einen ersten Arm und einen zweiten Arm umfasst, wobei der Schlitz (14) an dem Ende (16) des ersten Arms durch den Körper (12) geschlossen ist, wobei das Ende (18) des zweiten Arms offen ist und eine Mündung, über welche hinüber das Pfortenglied (22) positioniert ist, umfasst, wobei der zweite Arm normalerweise bei der Verwendung der Kupplung am höchsten angeordnet ist, wobei das Pfortenglied (22) in einer Ebene, die von dem C-förmigen Schlitz (14) geschnitten wird, und um eine Achse, die sich im Wesentlichen senkrecht zu dieser Ebene erstreckt, rotierbar ist, wobei das rotierbare Pfortenglied (22) eine Vertiefung (28) umfasst, die durch Rotieren des Pfortenglieds (22) relativ zu dem Körper (12) in Verbindung mit dem Schlitz (14) gebracht werden kann, **dadurch gekennzeichnet, dass** das Pfortenglied (22) ein im Wesentlichen kreisförmiges Element (24) umfasst, das zum Rotieren um seine Mittelachse angeordnet ist, wobei die Vertiefung (28) eine Region umfasst, die sich radial in das Element (24) hinein hin zu der Rotationsachse erstreckt.

2. Kupplung wie in Anspruch 1 beansprucht, **dadurch gekennzeichnet, dass** der zweite Arm des Schlitzes (14) neben einem Montagebereich (42) der Kupplung positioniert ist, wobei der Schlitz (14) sich weg von dem Montagebereich (42) hin zu seinem ersten Arm erstreckt.

3. Kupplung wie in Anspruch 1 oder 2 beansprucht, **dadurch gekennzeichnet, dass** Verriegelungsmittel zum Verriegeln des Pfortenglieds (22) gegen Rotationen bereitgestellt sind.

4. Kupplung wie in einem der vorstehenden Ansprüche beansprucht, **dadurch gekennzeichnet, dass** ein Anschlag (36) angepasst ist, um das Rotieren des Pfortenglieds (22) über einen eingestellten Punkt hinaus für eine gegebene Rotationsrichtung des Pfortenglieds (22) zu verhindern.

5. Kupplung wie in einem der vorstehenden Ansprüche beansprucht, **dadurch gekennzeichnet, dass** das Element (24) in einer teilweise kreisförmigen Vertiefung (74) gelagert ist, die in dem Körper (12) der Kupplung gebildet ist.

6. Kupplung wie in einem der vorstehenden Ansprüche beansprucht, **dadurch gekennzeichnet, dass** das Pfortenglied (22) ein Paar von kreisförmigen Elementen (22a, 22b) umfasst, die konzentrisch an einer Wand des Körpers (12) montiert sind, eines an jeder Seite desselben und durch eine Achse miteinander verbunden.

7. Kupplung wie in einem der vorstehenden Ansprüche beansprucht, **dadurch gekennzeichnet, dass** das kreisförmige Element (24) an gegenüberliegenden Enden desselben durch Wände (71, 73) des Körpers (12) begrenzt ist.

8. Kupplung wie in einem der vorstehenden Ansprüche beansprucht, **dadurch gekennzeichnet, dass** ein Betätiger (75) sich von dem Pfortenglied (22) erstreckt, um das Rotieren des letzteren zu erleichtern.

9. Kupplung wie in einem der vorstehenden Ansprüche beansprucht, **dadurch gekennzeichnet, dass** das Pfortenglied (22) reibschlüssig mit dem Körper (12) der Kupplung eingreift, um das Rotieren des Pfortenglieds (22) aus seiner geschlossenen Position heraus zu verhindern.

10. Kupplung wie in einem der vorstehenden Ansprüche beansprucht, **dadurch gekennzeichnet, dass** der Körper (12) eine Schulter (40) definiert, die von dem ersten Ende des Schlitzes (14) hervorsteht.

11. Baumaschine, **dadurch gekennzeichnet, dass** die Baumaschine eine Kupplung wie in einem der vorstehenden Ansprüche beansprucht umfasst.

12. Baumaschine wie in Anspruch 11 beansprucht, **dadurch gekennzeichnet, dass** die Baumaschine einen Gelenkarm umfasst, wobei die Kupplung an oder neben dem fernen Ende des Arms mit der Maschine gekoppelt ist.

## Revendications

1. Couplage comprenant un corps (12) définissant une fente (14) qui communique à une première extrémité (16) avec un extérieur du corps (12) et qui est fermée à une seconde extrémité (18), ainsi qu'un élément de porte (22) monté à rotation sur le corps (12) à la première extrémité de la fente (14) pour fermer normalement celle-ci, dans lequel la fente (14) du corps (12) est sensiblement en forme de C et comprend un premier bras et un second bras, la fente (14) étant fermée à l'extrémité (16) du premier bras par le corps (12), l'extrémité (18) du second bras étant ouverte et comprenant une bouche en travers de laquelle ledit élément de porte (22) est disposé, le second bras étant normalement agencé le plus en hauteur lors de l'utilisation du couplage, ledit élément de porte (22) pouvant tourner dans un plan sous-tendu par la fente en forme de C (14) et autour d'un axe qui s'étend de manière sensiblement perpendiculaire audit plan, l'élément de porte rotatif (22) comprenant une cavité (28) qui peut être amenée en communication avec la fente (14) par rotation de l'élément de porte (22) par rapport au corps (12), **caractérisé en ce que** l'élément de porte (22) comprend un élément sensiblement circulaire (24) agencé pour tourner autour de son axe central, la cavité (28) comprenant une région qui s'étend radialement dans l'élément (24) vers ledit axe de rotation.

2. Couplage selon la revendication 1, **caractérisé en ce que** le second bras de la fente (14) est disposé adjacent à une partie de montage (42) du couplage, la fente (14) s'écartant de la partie de montage (42) vers son premier bras.

3. Couplage selon la revendication 1 ou la revendication 2, **caractérisé en ce que** des moyens de verrouillage sont prévus pour verrouiller l'élément de porte (22) à l'encontre d'une rotation.

4. Couplage selon l'une quelconque des revendications précédentes, **caractérisé en ce qu'**un arrêt (36) est adapté pour empêcher la rotation de l'élément de porte (22) au-delà d'un point de consigne pour un sens de rotation donné de l'élément de porte (22).

5. Couplage selon l'une quelconque des revendications précédentes, **caractérisé en ce que** l'élément (24) est tourillonné dans une cavité en partie circulaire (74) formée dans le corps (12) du couplage.

6. Couplage selon l'une quelconque des revendications précédentes, **caractérisé en ce que** l'élément de porte (22) comprend une paire d'éléments circulaires (22a, 22b) montés de manière concentrique sur une paroi du corps (12), à raison d'un sur l'un et l'autre côté de celle-ci et interconnectés par un axe.

7. Couplage selon l'une quelconque des revendications précédentes, **caractérisé en ce que** l'élément circulaire (24) est délimité à ses extrémités axiales opposées par des parois (71, 73) du corps (12).

8. Couplage selon l'une quelconque des revendications précédentes, **caractérisé en ce qu'**un actionneur (75) s'étend de l'élément de porte (22) pour faciliter la rotation de celui-ci.

9. Couplage selon l'une quelconque des revendications précédentes, **caractérisé en ce que** l'élément de porte (22) s'engage à friction sur le corps (12) du couplage pour empêcher la rotation de l'élément de porte (22) depuis sa position fermée.

10. Couplage selon l'une quelconque des revendications précédentes, **caractérisé en ce que** le corps (12) définit un épaulement (40) qui fait saillie de la première extrémité de la fente (14).

11. Machine d'usine **caractérisée en ce que** la machine d'usine comprend un couplage selon l'une quelconque des revendications précédentes.

12. Machine d'usine selon la revendication 11, **caractérisée en ce que** la machine d'usine comprend un bras articulé, le couplage étant couplé à la machine à l'extrémité distale du bras ou de manière adjacente à celle-ci.
